# EUROPEAN PATENT SPECIFICATION

(11) **EP 3 539 899 B1**
(45) Date of publication and mention of the grant of the patent: **22.02.2023**
(21) Application number: 17870016.7
(22) Date of filing: 14.11.2017
(51) Int. Cl.: A01N 1/02

(54) **TUBE ARRAY-TYPE LIQUID NITROGEN CONTAINER**
ROHRANORDNUNGSARTIGER FLÜSSIGSTICKSTOFFBEHÄLTER
RÉCIPIENT D'AZOTE LIQUIDE DE TYPE RÉSEAU DE TUBES

(30) Priority: 14.11.2016 CN 201611026500
(43) Date of publication of application: 18.09.2019
(73) Proprietor: SHANGHAI ORIGINCELL BIOLOGICAL CRYO EQUIPMENT CO., LTD., Shanghai (CN)
(72) Inventor: QU, Jianguo, Shanghai 201203 (CN); LUO, Chen, Shanghai 201203 (CN); GU, Jun, Shanghai 201203 (CN)
(74) Representative: Isarpatent
(86) International application number: PCT/CN2017/110760
(87) International publication number: WO 2018/086615

(56) References cited:
- WO-A1-96/02801
- CN-A- 101 808 609
- CN-A- 102 869 932
- CN-A- 105 857 932
- CN-A- 105 857 937
- CN-A- 106 560 419
- CN-A- 106 628 783
- CN-U- 206 172 231
- JP-A- 2005 143 873
- JP-A- 2015 089 396
- US-A1- 2012 247 999
- US-A1- 2012 247 999

## Description

### Field of invention

The present invention relates to a tube array-type liquid nitrogen container.

### Prior arts

Liquid nitrogen containers are extensively used in hospitals and laboratories, mainly for cryopreservation of biological materials such as cells and tissues. A traditional liquid nitrogen container typically is a double-layer vacuum container that is made by soldering, having an opening on the top out of the center and internally having a rotatable inner rotator. The inner rotator carries a basket, in which cryopreservation tubes are loaded. Since soldering of such a large device unavoidably has some deformation, accurate rotation of the inner rotator is hard to achieve, in turn making automated storage of the cryopreservation tube impossible. In document US 2012/0247999 A1 a cryopreservation device is provided, which includes a first rotation lid rotatably mounted on the upper opening of a container body, a second rotation lid rotatably mounted on a circular opening provided on the first rotation lid, and a through-hole for getting a cryocane in and out of which is provided on the second lid.

### Content of the present invention

For solving the problem of existing liquid nitrogen containers that automated storage of the cryopreservation tube is impossible, the present invention provides a tube array-type liquid nitrogen container as defined in claim 1.

The tube array-type liquid nitrogen container comprises a container body provided with a container opening, a tube array assembly arranged in the container body, and a top cover hermetically covering the container opening, wherein the top cover can rotate in the container opening, the tube array assembly comprises a plurality of placement tubes used for placement of a cryopreservation tube, one end of each the placement tube has an opening, and the opening of each the placement tube faces the top cover, and the top cover is provided with at least one tube taking opening running through the top cover, and each tube taking opening is covered by a tube taking cover. The tube array-type liquid nitrogen container uses the tube array assembly comprising the plurality of placement tubes to store the cryopreservation tube, and cooperates with using the rotatable top cover and an external manipulator, so that automated storage of the cryopreservation tube is achieved.

Optionally, the container body has a double-layer structure with a vacuum zone sandwiched between its two layers. An intermediate space of the container body is applied with vacuum to form a vacuum layer that provides thermal insulation to the interior of the container body.

The container body comprises an inner column and an outer column sleeved outside the inner column, the inner column and the outer column are fixed to each other at bottom, the inner column has its top lower than the top of the outer column, and the inner column and the outer column have their tops connected through a corrugated pipe. The corrugated pipe has a wall thickness much smaller than the thickness of the inner column, and meanwhile the stroke is increased by more than one time, so as to reduce heat transmitted to the bottom of the inner column, thereby reducing loss of the liquid nitrogen.

Further optionally, the container body further comprises a sleeve for the corrugated pipe, the sleeve for the corrugated pipe comprises a sleeve end fixed to the top of the outer column and a sleeve body extending downward from the sleeve end, the sleeve body is located inside the corrugated pipe, the sleeve body has its outer periphery that faces the corrugated pipe fitted with the inner periphery of the corrugated pipe, and the sleeve body has its lower end portion fixed to the inner column. The sleeve for the corrugated pipe can prevents the inner column deformation caused by corrugated pipe being lengthened.

Further optionally, the inner periphery of the sleeve body is axially sloped and is fitted with the top cap in a sealing manner. The sleeve body with the sloped inner periphery can fit with top cap in a sealing manner better.

Optionally, tube array assembly further comprises an upper positioning plate, a lower positioning plate, and a central axle that fixedly connects the upper positioning plate and the lower positioning plate, the upper positioning plate is provided with a plurality of upper positioning holes, and the lower positioning plate is provided with a plurality of lower positioning holes, the upper positioning holes are coaxially aligned with the lower positioning holes in one to one correspondence, and each placement tube is positioned in the corresponding lower positioning hole after passing through the upper positioning hole.

Optionally, an auxiliary ball is arranged at the bottom of the placement tube, and the cryopreservation tube is placed on the auxiliary ball. In addition to pushing the cryopreservation tube during the tube-drawing operation, the auxiliary ball also provides damping function when the cryopreservation tube falls into the placement tube.

Optionally, the top cover is provided with at least one position sensor. The position sensors are arranged in circumferential direction of the top cover. Rotation angle of the top cover is positioned by the position sensors, so as to ensure that rotation location of the top cover is accurate.

Optionally, the tube taking opening covers the entire area in radial direction of the tube array assembly. No matter where the access site of the cryopreservation tube is in the tube array assembly, the tube taking opening can be aligned to the tube access site by simply rotating the top cover for a certain angle.

Optionally, a tube taking cover comprises a roof for the tube taking cover and an insulating layer for the tube taking, wherein the insulating layer is located below the roof for the tube taking cover, and the insulating layer for the tube taking cover is fitted with the tube taking opening in a sealing manner. With the insulating layer for the tube taking cover being fitted with the tube taking opening in a sealing manner, good thermal insulation effect can be achieved at the tube taking opening.

Based on the common sense in this art, the preferred terms can be combined in various ways.

The present invention provides the following positive advancements:

The tube array-type liquid nitrogen container uses a tube array assembly composed of a plurality of placement tubes to store the cryopreservation tubes, and is cooperated with the rotatable top cover and an external manipulator, thereby improving space utilization and thermal insulation capability, effectively ensuring safety of the cryopreservation tubes, and facilitating automatic storage of the cryopreservation tubes.

### Brief description of the drawings

Fig. 1 is an exploded view of a tube array-type liquid nitrogen container of the present invention.
Fig. 2 is a structural drawing of the container body of the tube-array-type liquid nitrogen container of Fig. 1.
Fig. 3 is a partial enlarged view of the container body of Fig. 2.
Fig. 4 is a structural schematic drawing of the tube array assembly of the tube array-type liquid nitrogen container of Fig. 1.
Fig. 5 is a partial enlarged view of the tube array assembly of Fig. 4.

### Reference numbers

- 1: container body
- 11: container opening
- 12: outer column
- 13: inner column
- 14: corrugated pipe
- 15: sleeve for corrugated pipe
- 151: sleeve end
- 152: sleeve body
- 2: tube array assembly
- 21: placement tube
- 22: upper positioning plate
- 23: lower positioning plate
- 24: central axle
- 25: auxiliary ball
- 3: top cover
- 31: tube taking opening
- 32: tube taking cover
- 321: roof for the tube taking cover
- 322: insulating layer for the tube taking cover
- 33: top cover roof
- 34: top cover insulating layer
- 35: position sensor
- 4: cryopreservation tube

### Detailed description of the preferred embodiment

The following preferred embodiments are made to clearly exhibit the above-mentioned and other technical contents, features and effects of the present invention. However, they are not intended to limit the present invention in any way. The invention is defined in the appended claims.

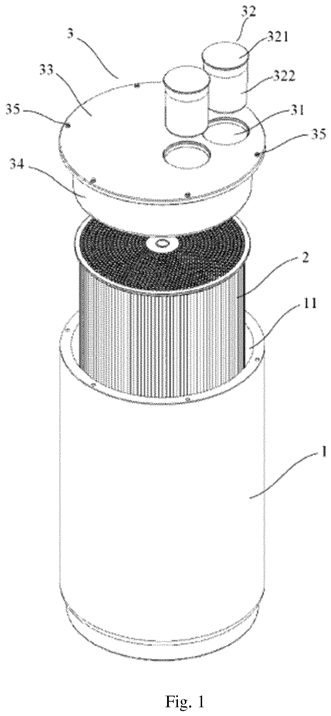

As shown in Fig. 1 to Fig. 5, a tube array-type liquid nitrogen container is provided in the present invention, and it comprises a container body 1 provided with a container opening 11, a tube array assembly 2 arranged in the container body 1, and a top cover 3 hermetically covering the container opening 11, the top cover 3 can rotate in the containing opening 11, the tube array assembly 2 comprises a plurality of placement tubes 21 used for placement of a cryopreservation tubes 4, one end of the placement tube 21 has an opening, and the opening of the placement tube 21 faces the top cover 3, and the top cover 3 is provided with at least one tube taking opening 31 running through the top cover 3, and each tube taking opening 31 is covered by a tube taking cover 32.

Using the tube array-type liquid nitrogen container, cooperating with an external manipulator, automatic storage of the cryopreservation tubes can be achieved, and detail process is as following.

When the cryopreservation tube 4 is needed to be extracted, the external manipulator rotates the top cover 3 first such that the tube taking opening 31 of the top cover 3 is rotated to a targeted site (i.e. a place above the placement tube 21 into which the targeted cryopreservation tube 4 is placed), and then lifts the tube taking cover 32 to open the tube taking opening 31. At last, a tube-drawing head of the manipulator is activated and closes to the tube array assembly 2 from above, so as to form an upward drawing force in the placement tube 21 into which the targeted cryopreservation tube 4 is placed, and draw the cryopreservation tube 4 from above until the cryopreservation tube 4 enters into the tube-drawing head.

When the cryopreservation tube 4 is needed to be stored, the external manipulator rotates the top cover 3 first such that the tube taking opening 31 of the top cover 3 is rotated to a targeted site (i.e. a place above the placement tube 21 into which the targeted cryopreservation tube 4 is ready to be placed), and then lifts the tube taking cover 32 to open the tube taking opening 31. At last, the cryopreservation tube 4 waiting to be stored is placed into the placement tube 21 by the manipulator.

The tube array-type liquid nitrogen container uses a tube array assembly 2 composed of a plurality of placement tubes 21 to store cryopreservation tubes 4, and with the cooperation of the top cover 3 and the external manipulator, and automatic storage of the cryopreservation tubes 4 is achieved.

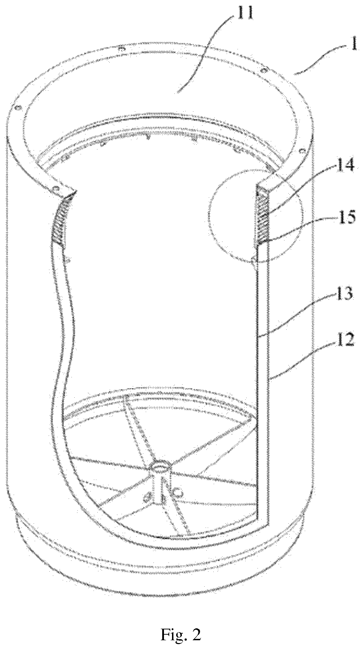

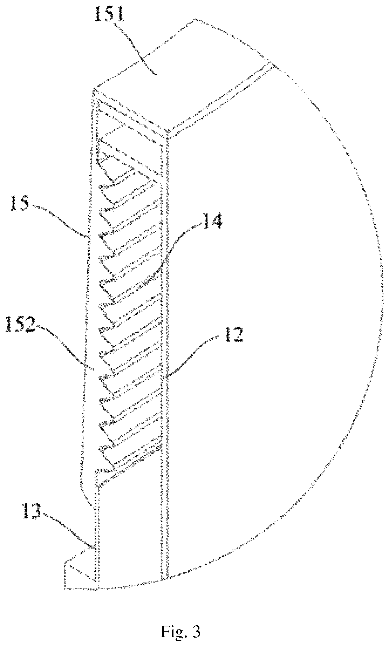

As shown in Fig. 2 and Fig. 3, the container body 1 has a double-layer structure with a vacuum zone sandwiched between its two layers. The intermediate space of the container body 1 is applied with vacuum to form a vacuum layer, which provides thermal insulation to the interior of the container body 1.

A specific configuration of the container body 1 is described as follows. In accordance with the invention the container body 1 comprises an outer column 12 and an inner column 13, which is sleeved by the outer column 12 at the outside. The inner column 13 and the outer column 12 are fixed to each other at the bottom. The inner column 13 has its top lower than the top of the outer column 12. The inner column 13 and the outer column 12 have their tops connected through a corrugated pipe 14. The corrugated pipe 14 has a wall thickness much smaller than the thickness of the inner column 13, and meanwhile the stroke is increased by more than one time, so as to reduce heat transmitted to the bottom of the inner column 13, thereby reducing loss of the liquid nitrogen.

The vacuum layer applies a downward pressure to the inner column 13. For preventing the deformation of the inner column 13 caused by corrugated pipe 14 being lengthened, a sleeve for the corrugated pipe 15 precisely fitting the corrugation profile of the corrugated pipe 14 is sleeved on the corrugated pipe 14. The sleeve for the corrugated pipe 15 is made of a non-metal material that has low thermal conductivity.

A specific configuration of the sleeve for the corrugated pipe 15 is configured as below.

The sleeve for the corrugated pipe 15 comprises a sleeve end 151 fixed to the top of the outer column 12 and a sleeve body 152 extending downward from the sleeve end 151, the sleeve body 152 is located inside the corrugated pipe 14, the outer periphery of the sleeve body 152 that faces the corrugated pipe 14, is fitted with the inner periphery of the corrugated pipe 14, and the sleeve body 152 has its lower end portion fixed to the inner column 13.

The inner periphery of the sleeve body 152 is such axially sloped that the inner periphery of the sleeve body 152 and the top cover 3 are fitted with each other in a sealing manner. Therein, the top cover 3 comprises a top cover roof 33 and a top cover insulating layer 34 located below the top cover roof 33. The inner periphery of the sleeve body 152 and the outer periphery of the top cap insulating layer 34 are fitted with each other in a sealing manner.

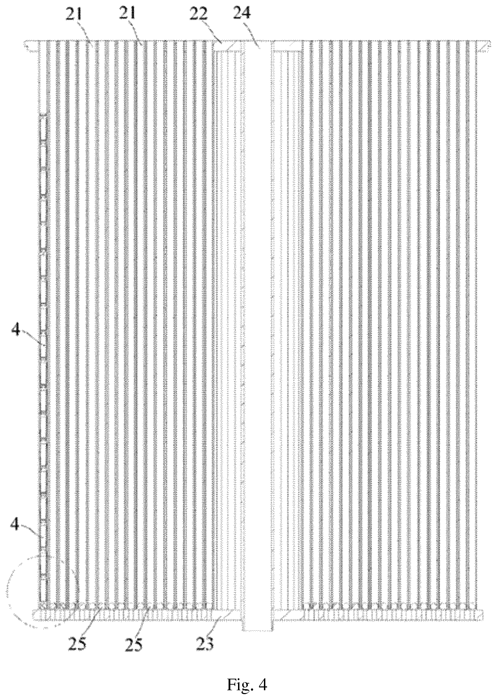

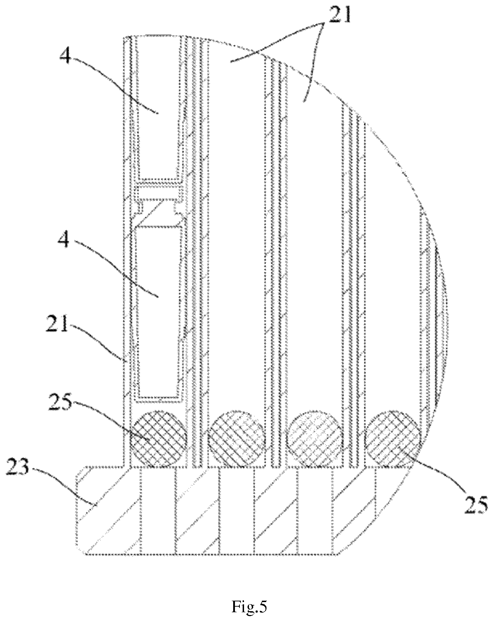

As shown in Fig. 4 and Fig. 5, the tube array assembly 2 further comprises an upper positioning plate 22, a lower positioning plate 23, and a central axle 24 that fastens the upper positioning plate 22 and the lower positioning plate 23, the upper positioning plate 22 is provided with a plurality of upper positioning holes, and the lower positioning plate 23 is provided with a plurality of lower positioning holes, and the upper positioning holes are coaxially aligned with the lower positioning holes one to one correspondence, and the placement tube 21 is positioned in the corresponding lower positioning hole after passing through the upper positioning hole. The upper positioning plate 22 and the lower positioning plate 23 are parallel to each other, and the central axle 24 is located at the center of the upper positioning plate 22 and the lower positioning plate 23, and the plurality of upper positioning holes are distributed along the periphery of the central axle 24 in multiple layers loop, while the plurality of lower positioning holes are also distributed along the periphery of the central axle 24 in multiple layers loop.

An auxiliary ball 25 is arranged at the bottom of the placement tube 21, so that the cryopreservation tube 4 is rested on the auxiliary ball 25. The auxiliary ball 25 has a diameter slightly smaller than that of the placement tube 21. The auxiliary ball 25 is made of a relatively soft and lightweight material, such as silicone. When the tube-drawing head of the manipulator draws the cryopreservation tube 4 upward, the auxiliary ball 25 will be also sucked and moved upward, thereby pushing the cryopreservation tube 4 above it to move upward. In addition to pushing the freezing tube 4 during the tube-drawing operation, the auxiliary ball 25 also functions for damping the cryopreservation tube 4 when the cryopreservation tube 4 falls into the holding tube 21.

The top cover 3 is provided with at least one position sensor 35. The position sensors 35 are arranged in circumferential direction of the top cover 3. Before the accessing operation, a position of a cryopreservation tube 4 to be accessed is first positioned, then the top cover 3 is rotated by the manipulator to a predetermined site. During rotation, the rotation angle of the top cover 3 is positioned by the position sensor 35, so as to ensure that the rotation position of the top cover 3 is proper. The amount of the position sensors 35 are multiple, and the multiple position sensors 35 are arranged in circumferential direction of the top cover 3, wherein preferred that the top cover 3 is peripherally provided with six evenly distributed position sensors 35.

The tube taking opening 31 covers the entire area in radial direction of the tube array assembly 2. No matter where the access site of the cryopreservation tube 4 is in the tube array assembly 2, the tube taking opening 31 can be aligned to the access site by simply rotating the top cover 3 for a certain angle, thereby realizing full coverage to all the access sites in the tube array assembly 2. For minimizing the area of the tube taking opening 31 while providing full coverage, there may be a plurality of tube taking openings 31 arranged at different positions in radial direction of the tube array assembly 2. Optionally, as shown in Fig. 1, there are two tube taking openings 31. The minimized area of the tube taking opening 31 helps to minimize loss of liquid nitrogen when the taking opening 31 is open.

As shown in Fig. 1, the tube taking cover 32 comprises a roof for the tube taking cover 321 and an insulating layer for the tube taking cover 322, and the insulating layer for the tube taking cover 322 is located below the roof for the tube taking cover 321, and the insulating layer for the tube taking cover 322 is fitted with the tube taking opening 31 in a sealing manner.

The placement tube 21 is usually an aluminum tube, and the length of the placement tube 21 is several times as long as the length of the cryopreservation tube 4, so that a plurality of cryopreservation tubes 4 can be put into the placement tube 21 successively.

To sum up, the tube array-type liquid nitrogen container of the present invention uses the tube array assembly composed of a plurality of placement tubes to store the cryopreservation tubes, and is cooperated with the rotatable top cover and an external manipulator, thereby improving space utilization and thermal insulation capability, effectively ensuring safety of the cryopreservation tubes, and facilitating automatic storage of cryopreservation tubes.

The present invention has been described with reference to the preferred embodiments and it is understood that the embodiments are not intended to limit the scope of the present invention. Moreover, as the contents disclosed herein should be readily understood and can be implemented by a person skilled in the art, all modifications should be encompassed which fall under the scope of the appended claims.

## Claims

1. A tube array-type liquid nitrogen container, wherein it comprises a container body (1) provided with a container opening (11), and a top cover (3) hermetically covering the container opening (11), wherein
the top cover (3) can rotate in the container opening (11), and the top cover (3) is provided with at least one tube taking opening (31) running through the top cover (3), and each tube taking opening (31) is covered by a tube taking cover (32),
**characterized in that** a tube array assembly (2) is arranged in the container body (1), wherein the tube array assembly (2) comprises a plurality of placement tubes (21) configured to be used for placement of a cryopreservation tube (4), one end of each placement tube (21) has an opening, and the opening of each placement tube (21) faces the top cover (3);
wherein the container body (1) comprises an inner column (13) and an outer column (12) sleeved outside the inner column (13), wherein the inner column (13) and the outer column (12) are fixed to each other at the bottom, the inner column (13) has its top lower than the top of the outer column (12), and the top of the inner column (13) and the top of the outer column (12) are connected through a corrugated pipe (14).

2. The tube array-type liquid nitrogen container of claim 1, wherein the container body (1) has a double-layer structure with a vacuum zone sandwiched between its two layers.

3. The tube array-type liquid nitrogen container of claim 1 or 2, wherein the container body (1) further comprises a sleeve (15) for the corrugated pipe with a sleeve end (151) fixed to the top of the outer column (12) and with a sleeve body (152) extending downward from the sleeve end (151), and the sleeve body (152) is located inside the corrugated pipe (14), the sleeve body (152) has its outer periphery that faces the corrugated pipe (14) fitted with an inner periphery of the corrugated pipe (14), and the sleeve body (152) has a lower end portion thereof fixed to the inner column (13).

4. The tube array-type liquid nitrogen container of claim 3, wherein an inner periphery of the sleeve body (152) is axially sloped, and fitted with the top cover (3) in a sealing manner.

5. The tube array-type liquid nitrogen container of any one of claims 1-4, wherein the tube array assembly (2) further comprises an upper positioning plate (22), a lower positioning plate (23), and a central axle (24) fixedly connecting the upper positioning plate (22) and the lower positioning plate (23), and the upper positioning plate (22) is provided with a plurality of upper positioning holes, the lower positioning plate (23) is provided with a plurality of lower positioning holes, and the upper positioning holes are coaxially aligned with the lower positioning holes in one to one correspondence, and
each placement tube (21) is positioned in the corresponding lower positioning hole after passing through the upper positioning hole.

6. The tube array-type liquid nitrogen container of any one of claims 1-5, wherein an auxiliary ball (25) is arranged at a bottom of each placement tube (21), and the cryopreservation tube (4) is placeable on the auxiliary ball (25).

7. The tube array-type liquid nitrogen container of any one of claims 1-6, wherein the top cover (3) is provided with at least one position sensor (35) being arranged in circumferential direction of the top cover (3).

8. The tube array-type liquid nitrogen container of any one of claims 1-7, wherein the tube taking opening (31) covers an entire area in a radial direction of the tube array assembly (2).

9. The tube array-type liquid nitrogen container of any one of claims 1-8, wherein the tube taking cover (32) comprises a roof for the tube taking cover (321) and an insulating layer for the tube taking cover (322), and the insulating layer for the tube taking cover (322) is located below the roof for the tube taking cover (321), and the insulating layer for the tube taking cover (322) is fitted with the tube taking opening (31) in a sealing manner.

## Patentansprüche

1. Flüssigstickstoffbehälter vom Röhrenanordnungstyp, wobei er einen Behälterkörper (1), der mit einer Behälteröffnung (11) versehen ist, und eine obere Abdeckung (3) umfasst, welche die Behälteröffnung (11) hermetisch abdeckt,
wobei sich die obere Abdeckung (3) in der Behälteröffnung (11) drehen kann und die obere Abdeckung (3) mit mindestens einer Röhrenaufnahmeöffnung (31) versehen ist, die durch die obere Abdeckung (3) verläuft, und jede Röhrenaufnahmeöffnung (31) durch eine Röhrenaufnahmeabdeckung (32) abgedeckt ist,
**dadurch gekennzeichnet, dass** eine Röhrenanordnungsbaugruppe (2) in dem Behälterkörper (1) angeordnet ist, wobei die Röhrenanordnungsbaugruppe (2) mehrere Platzierungsröhren (21) umfasst, die so eingerichtet sind, dass sie zum Platzieren einer Kryokonservierungsröhre (4) verwendet werden, wobei ein Ende jeder Platzierungsröhre (21) eine Öffnung aufweist und die Öffnung jeder Platzierungsröhre (21) der oberen Abdeckung (3) zugewandt ist;
wobei der Behälterkörper (1) eine innere Säule (13) und eine äußere Säule (12) umfasst, welche die innere Säule (13) von außen ummantelt, wobei die innere Säule (13) und die äußere Säule (12) an der Unterseite aneinander befestigt sind, die Oberseite der inneren Säule (13) niedriger als die Oberseite der äußeren Säule (12) ist und die Oberseite der inneren Säule (13) und die Oberseite der äußeren Säule (12) durch ein gewelltes Rohr (14) verbunden sind.

2. Flüssigstickstoffbehälter vom Röhrenanordnungstyp nach Anspruch 1, wobei der Behälterkörper (1) eine Doppelschicht-Struktur mit einer Vakuumzone aufweist, die zwischen seinen beiden Schichten sandwichartig eingeschlossen ist.

3. Flüssigstickstoffbehälter vom Röhrenanordnungstyp nach Anspruch 1 oder 2, wobei der Behälterkörper (1) ferner eine Hülse (15) für das gewellte Rohr (15) mit einem Hülsenende (151), das an der Oberseite der äußeren Säule (12) befestigt ist, und mit einem Hülsenkörper (152), der sich von dem Hülsenende (151) nach unten erstreckt, umfasst und sich der Hülsenkörper (152) im Inneren des gewellten Rohrs (14) befindet, wobei der äußere Umfang des Hülsenkörpers (152), der dem gewellten Rohr (14) zugewandt ist, an einen inneren Umfang des gewellten Rohrs (14) angepasst ist, und der Hülsenkörper (152) einen unteren Endabschnitt aufweist, der an der inneren Säule (13) befestigt ist.

4. Flüssigstickstoffbehälter vom Röhrenanordnungstyp nach Anspruch 3, wobei ein innerer Umfang des Hülsenkörpers (152) axial abgeschrägt ist und an die obere Abdeckung (3) auf abdichtende Weise angepasst ist.

5. Flüssigstickstoffbehälter vom Röhrenanordnungstyp nach einem der Ansprüche 1-4, wobei die Röhrenanordnungsbaugruppe (2) ferner eine obere Positionierungsplatte (22), eine untere Positionierungsplatte (23) und eine zentrale Achse (24) umfasst, welche die obere Positionierungsplatte (22) und die untere Positionierungsplatte (23) fest verbindet, und die obere Positionierungsplatte (22) mit mehreren oberen Positionierungslöchern versehen ist, die untere Positionierungsplatte (23) mit mehreren unteren Positionierungslöchern versehen ist und die oberen Positionierungslöcher koaxial mit den unteren Positionierungslöchern in eins-zu-eins-Entsprechung ausgerichtet sind und jedes Platzierungsrohr (21) in dem entsprechenden unteren Positionierungsloch positioniert wird, nachdem es durch das obere Positionierungsloch hindurchgegangen ist.

6. Flüssigstickstoffbehälter vom Röhrenanordnungstyp nach einem der Ansprüche 1-5, wobei eine Hilfskugel (25) an einer Unterseite jeder Platzierungsröhre (21) angeordnet ist und die Kryokonservierungsröhre (4) auf der Hilfskugel (25) platzierbar ist.

7. Flüssigstickstoffbehälter vom Röhrenanordnungstyp nach einem der Ansprüche 1-6, wobei die obere Abdeckung (3) mit mindestens einem Positionssensor (35) versehen ist, der in Umfangsrichtung der oberen Abdeckung (3) angeordnet ist.

8. Flüssigstickstoffbehälter vom Röhrenanordnungstyp nach einem der Ansprüche 1-7, wobei die Röhrenaufnahmeöffnung (31) einen gesamten Bereich in einer radialen Richtung der Röhrenanordnungsbaugruppe (2) abdeckt.

9. Flüssigstickstoffbehälter vom Röhrenanordnungstyp nach einem der Ansprüche 1-8, wobei die Röhrenaufnahmeabdeckung (32) ein Dach für die Röhrenaufnahmeabdeckung (321) und eine Isolierschicht für die Röhrenaufnahmeabdeckung (322) umfasst und sich die Isolierschicht für die Röhrenaufnahmeabdeckung (322) unterhalb des Daches für die Röhrenaufnahmeabdeckung (321) befindet und die Isolierschicht für die Röhrenaufnahmeabdeckung (322) in abdichtender Weise an die Röhrenaufnahmeöffnung (31) angepasst ist.

## Revendications

1. Contenant d'azote liquide de type réseau de tubes, dans lequel il comprend un corps de contenant (1) pourvu d'une ouverture de contenant (11), et un couvercle supérieur (3) couvrant hermétiquement l'ouverture de contenant (11), dans lequel le couvercle supérieur (3) peut tourner dans l'ouverture de contenant (11), et le couvercle supérieur (3) est pourvu d'au moins une ouverture de prise de tube (31) traversant le couvercle supérieur (3), et chaque ouverture de prise de tube (31) est couverte par un couvercle de prise de tube (32),
**caractérisé en ce qu'**un ensemble réseau de tubes (2) est agencé dans le corps de contenant (1), dans lequel l'ensemble réseau de tubes (2) comprend une pluralité de tubes de placement (21) configurés pour être utilisés pour le placement d'un tube de cryoconservation (4), une extrémité de chaque tube de placement (21) a une ouverture, et l'ouverture de chaque tube de placement (21) est face au couvercle supérieur (3) ;
dans lequel le corps de contenant (1) comprend une colonne interne (13) et une colonne externe (12) manchonnée à l'extérieur de la colonne interne (13), dans lequel la colonne interne (13) et la colonne externe (12) sont fixées l'une à l'autre au niveau du fond, la colonne interne (13) a sa partie haute plus basse que la partie haute de la colonne externe (12), et la partie haute de la colonne interne (13) et la partie haute de la colonne externe (12) sont reliées par le biais d'un tuyau ondulé (14).

2. Contenant d'azote liquide de type réseau de tubes selon la revendication 1, dans lequel le corps de contenant (1) a une structure double couche avec une zone de vide enserrée entre ses deux couches.

3. Contenant d'azote liquide de type réseau de tubes selon la revendication 1 ou 2, dans lequel le corps de contenant (1) comprend en outre un manchon (15) pour le tuyau ondulé avec une extrémité de manchon (151) fixée à la partie haute de la colonne externe (12) et avec un corps de manchon (152) s'étendant vers le bas depuis l'extrémité de manchon (151), et le corps de manchon (152) est situé à l'intérieur du tuyau ondulé (14), le corps de manchon (152) a sa périphérie externe qui est face au tuyau ondulé (14) ajustée avec une périphérie interne du tuyau ondulé (14), et le corps de manchon (152) a une portion d'extrémité inférieure de celui-ci fixée à la colonne interne (13).

4. Contenant d'azote liquide de type réseau de tubes selon la revendication 3, dans lequel une périphérie interne du corps de manchon (152) est inclinée axialement, et ajustée avec le couvercle supérieur (3) de manière étanche.

5. Contenant d'azote liquide de type réseau de tubes selon l'une quelconque des revendications 1 à 4, dans lequel l'ensemble réseau de tubes (2) comprend en outre une plaque de positionnement supérieure (22), une plaque de positionnement inférieure (23), et un axe central (24) reliant fixement la plaque de positionnement supérieure (22) et la plaque de positionnement inférieure (23), et la plaque de positionnement supérieure (22) est pourvue d'une pluralité de trous de positionnement supérieurs, la plaque de positionnement inférieure (23) est pourvue d'une pluralité de trous de positionnement inférieurs, et les trous de positionnement supérieurs sont alignés coaxialement avec les trous de positionnement inférieurs en correspondance biunivoque, et chaque tube de placement (21) est positionné dans le trou de positionnement inférieur correspondant après être passé à travers le trou de positionnement supérieur.

6. Contenant d'azote liquide de type réseau de tubes selon l'une quelconque des revendications 1 à 5, dans lequel une bille auxiliaire (25) est agencée au niveau d'un fond de chaque tube de placement (21), et le tube de cryoconservation (4) peut être placé sur la bille auxiliaire (25).

7. Contenant d'azote liquide de type réseau de tubes selon l'une quelconque des revendications 1 à 6, dans lequel le couvercle supérieur (3) est pourvu d'au moins un capteur de position (35) agencé en direction circonférentielle du couvercle supérieur (3).

8. Contenant d'azote liquide de type réseau de tubes selon l'une quelconque des revendications 1 à 7, dans lequel l'ouverture de prise de tube (31) couvre une zone entière dans une direction radiale de l'ensemble réseau de tubes (2).

9. Contenant d'azote liquide de type réseau de tubes selon l'une quelconque des revendications 1 à 8, dans lequel le couvercle de prise de tube (32) comprend un toit pour le couvercle de prise de tube (321) et une couche isolante pour le couvercle de prise de tube (322), et la couche isolante pour le couvercle de prise de tube (322) est située en dessous du toit pour le couvercle de prise de tube (321), et la couche isolante pour le couvercle de prise de tube (322) est ajustée avec l'ouverture de prise de tube (31) de manière étanche.
